# EUROPEAN PATENT SPECIFICATION

(11) **EP 3 998 516 B1**
(45) Date of publication and mention of the grant of the patent: **11.03.2026**
(21) Application number: 20836753.2
(22) Date of filing: 09.07.2020
(51) Int. Cl.: G05D 1/00

(54) **AUTOMATIC TRAVEL SYSTEM**
AUTOMATISCHES FAHRSYSTEM
SYSTÈME DE DÉPLACEMENT AUTOMATIQUE

(30) Priority: 10.07.2019 JP 2019128309
(43) Date of publication of application: 18.05.2022
(73) Proprietor: Yanmar Power Technology Co., Ltd., Osaka-shi Osaka 530-0013 (JP)
(72) Inventor: IWASE, Takuya, Osaka-shi, Osaka 530-0014 (JP); SUGITA, Shiro, Osaka-shi, Osaka 530-0014 (JP); HIDAKA, Shigemi, Osaka-shi, Osaka 530-0014 (JP)
(74) Representative: Sekiguchi, Kazuya
(86) International application number: PCT/JP2020/026931
(87) International publication number: WO 2021/006321

(56) References cited:
- WO-A1-2013/105211
- WO-A1-2013/105211
- JP-A- 2000 051 418
- JP-A- 2009 042 845
- JP-A- 2009 136 988
- JP-A- H0 269 806
- JP-A- H07 104 846
- US-A1- 2016 174 459
- US-A1- 2017 131 721

## Description

### TECHNICAL FIELD

The present invention relates to an automatic travel system that causes an operation vehicle to automatically travel.

### BACKGROUND ART

The above automatic travel system includes a positioning unit that acquires positional information of an operation vehicle by using a satellite positioning system or the like, and causes the operation vehicle to automatically travel along a target travel path generated in advance on the basis of the positional information of the operation vehicle acquired by the positioning unit (see, for example, Patent Literature 1). Patent Literature 2 discloses a method of mowing multiple areas including training the robotic mower to move across a space separating at least two areas, and initiating a mowing operation. Patent Literature 3 discloses a robot cleaner and a method for controlling the same.

### CITATION LIST

### Patent Literature

Patent Literature 1: Japanese Patent No. 6170185
Patent Literature 2 : US 2016/174459 A1
Patent Literature 3 : US 2017/131721 A1

### DISCLOSURE OF INVENTION

### PROBLEMS TO BE SOLVED BY THE INVENTION

For example, in agricultural operation or the like, operation is not completed only in a specific operation region, and is sometimes performed in a plurality of operation regions in a day. In this case, operation is performed in an operation region, and when the operation is completed, an operation vehicle moves to a next operation region by traveling outside the operation region such as a farm road, and performs operation in the next operation region. Thus, while operation in the operation region, and movement between the operation regions are repeatedly performed, operation is performed in a plurality of the operation regions.

However, in the system described in the above Patent Literature 1, a field and the like are defined as the operation regions, and a target travel path is generated in each operation region, and therefore, in each operation region, an operation vehicle is caused to automatically travel along the target travel path, but cannot be caused to automatically travel outside the operation regions. Accordingly, in the movement between the operation regions, a user or the like needs to cause the operation vehicle to travel manually, which may cause a decrease in operation efficiency, and there is room for improvement in this respect.

In view of this status, a principal object of the present invention is to provide an automatic travel system that can perform not only operation in operation regions but also movement between operation regions by automatic travel with an operation vehicle when operation is performed in a plurality of the operation regions, and that enables improvement of operation efficiency.

### MEANS FOR SOLVING THE PROBLEMS

A first characteristic configuration of the present invention is to include a path generation unit that generates an operation path for each of a plurality of operation regions and an automatic travel control unit that causes an operation vehicle to automatically travel along the operation paths generated by the path generation unit, in which the path generation unit is capable of generating a movement path that connects the operation regions by causing the operation vehicle to travel outside the operation regions, and the automatic travel control unit temporarily stops the operation vehicle before switching a traveling path where the operation vehicle is to be caused to automatically travel from a path inside the operation regions to a path outside the operation regions, and causes the operation vehicle to automatically travel by switching the traveling path to the path outside the operation regions when the temporal stop state is cancelled.

According to the present configuration, when operation is performed in the plurality of operation regions, not only operation in the operation regions, but also movement between the operation regions can be performed by automatic travel with the operation vehicle, and it is possible to improve operation efficiency.

### BRIEF DESCRIPTION OF DRAWINGS

FIG. 1 is a diagram illustrating a schematic configuration of an automatic travel system.
FIG. 2 is a block diagram illustrating the schematic configuration of the automatic travel system.
FIG. 3 is a front view of a tractor viewed from the front side.
FIG. 4 is a rear view of the tractor viewed from the rear side.
FIG. 5 is a diagram illustrating a target travel path in a plurality of operation regions.
FIG. 6 is a diagram illustrating an operation region selection screen as a display screen of a display unit.
FIG. 7 is a diagram illustrating a display screen of the display unit in a state in which an operation region where operation is to be performed is determined.
FIG. 8 is a diagram illustrating an operation order selection screen as a display screen of the display unit.
FIG. 9 is a diagram illustrating a display screen of the display unit in a state in which a target travel path is corrected.
FIG. 10 is a diagram illustrating a display screen of the display unit in a state in which a target travel path is corrected.
FIG. 11 is a diagram illustrating a display screen of the display unit in a state in which a target travel path is corrected.
FIG. 12 is a flowchart illustrating motion of the tractor when the tractor is caused to automatically travel.
FIG. 13 is a diagram schematically illustrating a state of automatically traveling inside the operation region, and a state of exiting outside the operation region by automatic travel.
FIG. 14 is a diagram schematically illustrating a state of automatically traveling outside the operation region, and a state of entering inside the operation region by automatic travel.
FIG. 15 is a diagram for illustrating a case where the entry direction is corrected at the time of entering inside the operation region.

### DESCRIPTION OF EMBODIMENTS

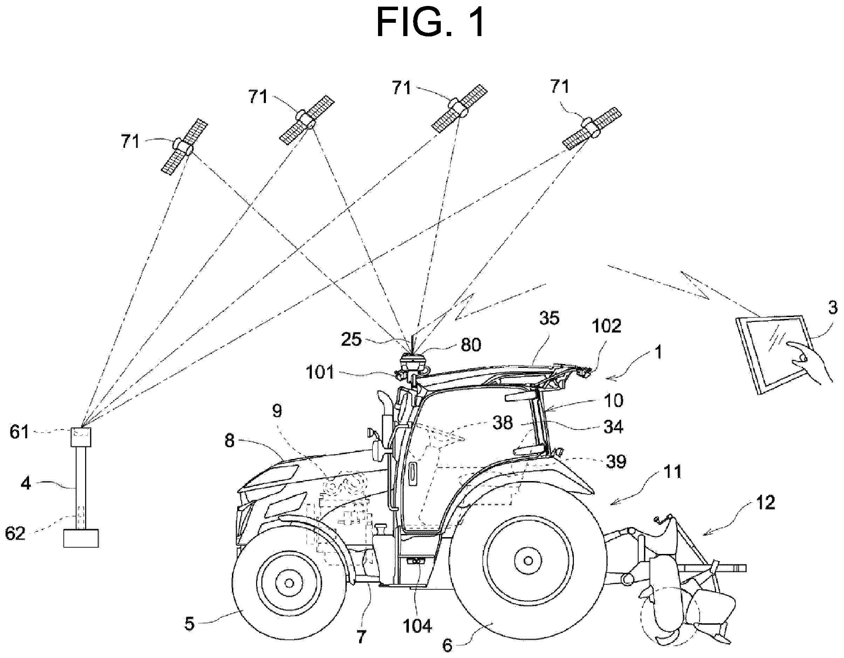

An embodiment of an automatic travel system according to the present invention will be described with reference to the drawings. As illustrated in FIG. 1, this automatic travel system is applied to a tractor 1 as an operation vehicle, but can be applied to, other than a tractor, a passenger operation vehicle such as a passenger rice planter, a combine, a passenger mower, a wheel loader, and a snowplow, and an unmanned operation vehicle such as an unmanned mower.

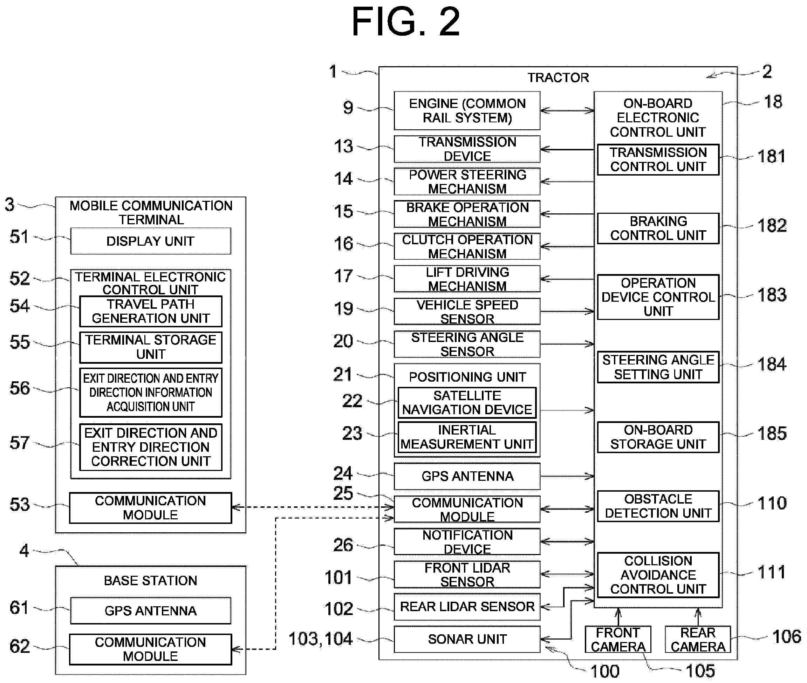

As illustrated in FIG. 1 and FIG. 2, this automatic travel system includes an automatic travel unit 2 mounted on the tractor 1, and a mobile communication terminal 3 which is set so as to be able to be communicated with the automatic travel unit 2. As the mobile communication terminal 3, a tablet-type personal computer, a smartphone, or the like having a touch-operable touch panel-type display unit 51 (such as a liquid crystal panel) or the like can be employed.

The tractor 1 includes a travel machine body 7 having left and right front wheels 5 which function as drivable steering wheels, and left and right rear wheels 6 which are drivable. On the front side of the travel machine body 7, a bonnet 8 is disposed, and an electronically controlled diesel engine (hereinafter referred to as an engine) 9 equipped with a common rail system is provided in the bonnet 8. On the rear side of the travel machine body 7 with respect to the bonnet 8, a cabin 10 forming a passenger-type driver unit is provided.

A rotary tillage device, which is an example of an operation device 12, can be coupled to a rear portion of the travel machine body 7 in such a manner as to be able to lift, lower, and roll, via a three-point linkage mechanism 11. Various operation devices 12 such as a mower, a plow, a seeding device, and a spraying device can be coupled to a rear portion of the tractor 1 in place of the rotary tillage device.

As illustrated in FIG. 2, the tractor 1 includes an electronically controlled transmission device 13 that shifts power from the engine 9, a fully hydraulic power steering mechanism 14 that steers the left and right front wheels 5, left and right side brakes (not illustrated) that brakes the left and right rear wheels 6, an electronically controlled brake operation mechanism 15 that enables hydraulic operation of the left and right side brakes, an operation clutch (not illustrated) that connects and disconnects transmission to the operation device 12 such as the rotary tilling device, an electronically controlled clutch operation mechanism 16 that enables hydraulic operation of the operation clutch, an electro-hydraulically controlled lift driving mechanism 17 that causes the operation device 12 such as the rotary tilling device to lift and lower, an on-board electronic control unit 18 having various control programs related to automatic travel and the like of the tractor 1, a vehicle speed sensor 19 that detects the vehicle speed of the tractor 1, a steering angle sensor 20 that detects the steering angle of the front wheels 5, a positioning unit 21 that measures a current position and a current bearing of the tractor 1, and the like.

An electronically controlled gasoline engine equipped with an electronic governor may be employed for the engine 9. A hydromechanical transmission (HMT), a hydrostatic transmission (HST), a belt-type continuously variable transmission, or the like can be employed for the transmission device 13. An electric power steering mechanism 14 including an electric motor, or the like may be employed for the power steering mechanism 14.

As illustrated in FIG. 1, inside the cabin 10, a steering wheel 38 which enables manual steering of the left and right front wheels 5 via the power steering mechanism 14 (see FIG. 2), a driver's seat 39 for a passenger, a touch panel type display unit, various operation tools, and the like are provided.

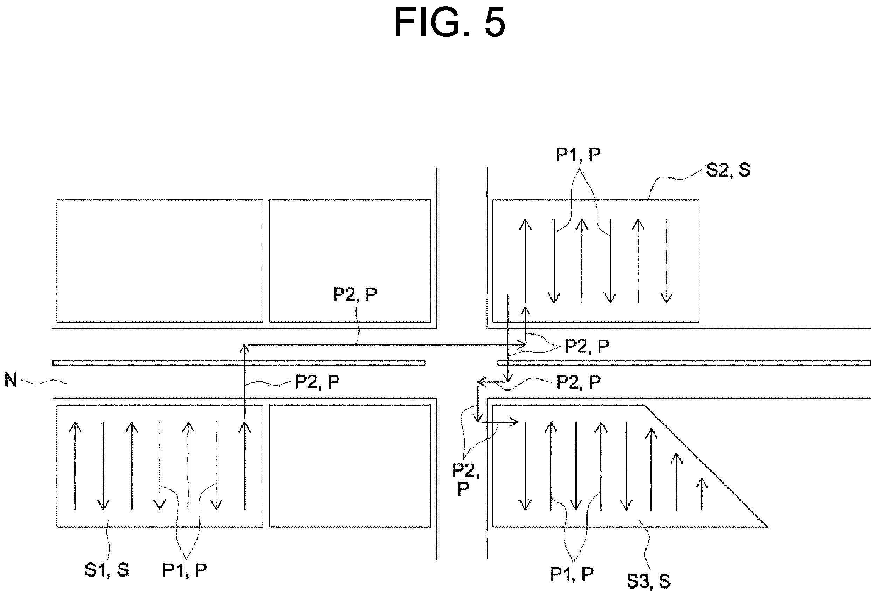

As illustrated in FIG. 2, the on-board electronic control unit 18 has a transmission control unit 181 that controls actuation of the transmission device 13, a braking control unit 182 that controls the actuation of the right and left side brakes, an operation device control unit 183 that controls actuation of the operation device 12 such as the rotary tillage device, a steering angle setting unit 184 that sets the target steering angles of the right and left front wheels 5 during automatic travel and outputs the set target steering angles to the power steering mechanism 14, and a nonvolatile on-board storage unit 185 that stores a previously generated target travel path P (see FIG. 5, for example) for automatic travel and the like.

As illustrated in FIG. 2, the positioning unit 21 includes a satellite navigation device 22 that measures the current position and the current bearing of the tractor 1 by using the Global Positioning System (GPS) which is an example of the Navigation Satellite System (NSS), and an Inertial Measurement Unit (IMU) 23 which has a three-axis gyroscope, a three-axis acceleration sensor, and the like, and measures the attitude, the bearing and the like of the tractor 1. Example of a GPS-based positioning method include a DGPS (Differential GPS: Relative Positioning System) and an RTK-GPS (Real Time Kinematic GPS: Interferometric Positioning System). In this embodiment, the RTK-GPS which is suitable for movable body positioning is used. Therefore, a base station 4 that enables the positioning using the RTK-GPS is installed at a known location around a field, as illustrated in FIG. 1 and FIG. 2.

As illustrated in FIG. 2, the tractor 1 and the reference station 4 are provided with positioning antennas 24, 61 for receiving radio waves transmitted from a positioning satellite 71 (see FIG. 1), and communication modules 25, 62 for enabling wireless communication of various information including positioning information (correction information) between the tractor 1 and the base station 4, respectively. Consequently, the satellite navigation device 22 can measure the current position and current bearing of the tractor 1 with high accuracy, on the basis of positioning information obtained by receiving a radio wave from the positioning satellite 71 by the positioning antenna 24 on the tractor side and positioning information (correction information for measuring the current position of the tractor 1) obtained by receiving a radio wave from the positioning satellite 71 by the positioning antenna 61 on the base station side. The positioning unit 21 includes the satellite navigation device 22 and the inertial measurement unit 23, so that it is possible to measure the current position, the current bearing and the attitude angle (the yaw angle, the roll angle and the pitch angle) of the tractor 1 with high accuracy.

The positioning antenna 24, the communication module 25, and the inertial measurement unit 23 provided in the tractor 1 are housed in an antenna unit 80, as illustrated in FIG. 1. The antenna unit 80 is disposed at an upper position on the front side of the cabin 10.

As illustrated in FIG. 2, the mobile communication terminal 3 includes a terminal electronic control unit 52 having various control programs and the like for controlling the actuation of the display unit 51 and the like, and a communication module 53 that enables wireless communication of various information including positioning information with the communication module 25 on the tractor side. The terminal electronic control unit 52 has a travel path generation unit 54 (corresponding to a path generation unit) that generates target travel path P (see FIG. 5, for example) for causing the tractor 1 to automatically travel, and a non-volatile terminal storage unit 55 that stores various input information input by a user, the target travel path P generated by the travel path generation unit 54, and the like.

While a way of generation of the target travel path P by the travel path generation unit 54 will be described below, the travel path generation unit 54 is capable of generating not only an operation path P1 within operation regions S but also a movement path P2 connecting operation regions S each other outside the operation regions S as the target travel path P, as illustrated in FIG. 5. The target travel path P generated by the travel path generation unit 54 can be displayed on the display unit 51 and is stored in the terminal storage unit 55 as path information. The path information includes the azimuth angle of the target travel path P, the set engine rotating velocity and the target travel speed set in accordance with a traveling mode of the tractor 1 on the target travel path P, and the like.

When the travel path generation unit 54 generates the target travel path P, the terminal electronic control unit 52 transfers the path information from the mobile communication terminal 3 to the tractor 1, so that the on-board electronic control unit 18 of the tractor 1 can obtain the path information. The on-board electronic control unit 18 can cause the tractor 1 to automatically travel along the target travel path P while acquiring its own current position (current position of the tractor 1) by the positioning unit 21 on the basis of the acquired path information. The current position of the tractor 1 acquired by the positioning unit 21 is transmitted from the tractor 1 to the mobile communication terminal 3 in real time (for example, every few milliseconds), and the mobile communication terminal 3 grasps the current position of the tractor 1.

As to the transfer of the path information, at a stage before the tractor 1 starts the automatic travel, the entire path information can be transferred from the terminal electronic control unit 52 to the on-board electronic control unit 18 at once. In addition, for example, the path information including the target travel path P can be divided into a plurality of path portions each having a small amount of information for each predetermined distance. In this case, at the stage before the tractor 1 starts the automatic travel, only an initial path portion of the path information is transferred from the terminal electronic control unit 52 to the on-board electronic control unit 18. After the start by the automatic travel, each time the tractor 1 reaches a path acquisition point which is set in accordance with the amount of information or the like, the path information on only a subsequent path portion corresponding to the point may be transferred from the terminal electronic control unit 52 to the on-board electronic control unit 18.

To start the automatically travel by tractor 1, for example, when a user or the like moves the tractor 1 to a start point and various conditions for starting the automatic travel are satisfied, the user instructs the tractor to start the automatic travel by operating the display unit 51 in the mobile communication terminal 3, so that the mobile communication terminal 3 sends an instruction for starting the automatic travel to the tractor 1. Consequently, in the tractor 1, the on-board electronic control unit 18 receives the instruction for starting the automatic travel to start automatic travel control for causing the tractor 1 to automatically travel along the target travel path P while acquiring its own current position (the current position of the tractor 1) by the positioning unit 21. The on-board electronic control unit 18 is configured as an automatic travel control unit that performs automatic travel control for causing the tractor 1 to automatically travel along the target travel path P on the basis of the positioning information of the tractor 1 acquired by the positioning unit 21 by using a satellite positioning system.

The automatic travel control includes automatic transmission control for automatically controlling the actuation of the transmission device 13, automatic braking control for automatically controlling the actuation of the brake operation mechanism 15, automatic steering control for automatically steering the left and right front wheels 5, automatic control for operation for automatically controlling the actuation of the operation device 12 such as the rotary tillage device, and the like.

In the automatic transmission control, the transmission control unit 181 automatically controls the actuation of the transmission device 13 such that the target travel speed set in accordance with the travel mode of the tractor 1 on the target travel path P is obtained as the vehicle speed of the tractor 1, on the basis of the path information of the target travel path P including the target travel speed, the output of the positioning unit 21, and the output of the vehicle speed sensor 19.

In the automatic braking control, the braking control unit 182 automatically controls the actuation of the brake operation mechanism 15 such that the left and right side brakes properly brake the left and right rear wheels 6 in the braking region included in **the path information** of the target travel path P, on the basis of the target travel path P and the output of the positioning unit 21.

In the automatic steering control, the steering angle setting unit 184 obtains and sets the target steering angles of the left and right front wheels 5 on the basis of the path information of the target travel path P and the output of the positioning unit 21, and outputs the set target steering angle to the power steering mechanism 14 such that the tractor 1 automatically travels on the target travel path P. The power steering mechanism 14 automatically steers the left and right front wheels 5 such that the target steering angles are obtained as the steering angles of the left and right front wheels 5 on the basis of the target steering angles and the output of the steering angle sensor 20.

In the automatic control for operation, the operation device control unit 183 automatically controls the actuation of the clutch operation mechanism 16 and the lift driving mechanism 17 such that predetermined operation (for example, tilling operation) by the operation device 12 is started as the tractor 1 reaches an operation start point on the operation path P1 (for example, see FIG. 5), and such that the predetermined operation by the operation device 12 is stopped as the tractor 1 reaches an operation end point on the operation path P1 (for example, see FIG. 5), on the basis of the path information of the target travel path P and the output of the positioning unit 21.

Thus, in the tractor 1, the automatic travel unit 2 is composed of the transmission device 13, the power steering mechanism 14, the brake operation mechanism 15, the clutch operation mechanism 16, the lift driving mechanism 17, the on-board electronic control unit 18, the vehicle speed sensor 19, the steering angle sensor 20, the positioning unit 21, the communication module 25, and the like.

In this embodiment, it is possible to cause the tractor 1 not only to automatically travel without a user or the like who boards the cabin 10, but also to automatically travel in a state in which a user or the like boards the cabin 10. Therefore, the tractor 1 can be caused not only to automatically travel along the target travel path P by the automatic travel control by the on-board electronic control unit 18 without a user or the like who boards the cabin 10, but also to automatically travel along the target travel path P by the automatic travel control by the on-board electronic control unit 18 even in a case where the user or the like boards the cabin 10.

When a user or the like boards the cabin 10, the on-board electronic control unit 18 can switch between an automatic travel state in which the tractor 1 is caused to automatically travel and a manual travel state in which the tractor 1 is caused to travel on the basis of the operation of the user or the like. Therefore, it is possible to switch from the automatic travel state to the manual travel state during automatic travel on the target travel path P in the automatic travel state, and conversely, it is possible to switch from the manual travel state to the automatic travel state during travel in the manual travel state. As to switching between the manual travel state and the automatic travel state, for example, a switching operation unit for switching between the automatic travel state and the manual travel state can be provided near the driver's seat 39, and the switching operation unit can be displayed on the display unit 51 of the mobile communication terminal 3. When the user operates the steering wheel 38 during automatic travel control by the on-board electronic control unit 18, the system can be switched from the automatic travel state to the manual travel state.

As illustrated in FIG. 1 and FIG. 2, the tractor 1 includes an obstacle detection system 100 for detecting an obstacle in the surroundings of the tractor 1 (travel machine body 7) and avoiding collision with the obstacle. The obstacle detection system 100 includes a plurality of LiDAR sensors 101, 102 each capable of three dimensionally measuring a distance to an object to be measured by using a laser, sonar units 103, 104 each having a plurality of sonars capable of measuring a distance to an object to be measured by using ultrasonic waves, cameras 105, 106 that image the surroundings of the tractor 1 (travel machine body 7), an obstacle detection unit 110, and a collision avoidance control unit 111.

The objects to be measured by the LiDAR sensors 101, 102, the sonar units 103, 104 and the cameras 105, 106 are objects, people, and the like. The LiDAR sensors 101, 102 are provided with a front LiDAR sensor 101 for measuring the front side of the tractor 1 as the object to be measured and a rear LiDAR sensor 102 for measuring the rear side of the tractor 1 as the object to be measured, respectively. The sonar units 103, 104 are provided with a right side sonar unit 103 for measuring the right side of the tractor 1 as the object to be measured and a left side sonar unit 104 for measuring the left side of the tractor 1 as the object to be measured, respectively. The cameras 105 and 106 are provided with a front camera 105 for measuring the front side of the tractor 1 as the object to be measured and a rear camera 106 for measuring the rear side of the tractor 1 as the object to be measured, respectively.

The obstacle detection unit 110 is configured to perform an obstacle detection process for detecting the object to be measured such as an object and a person within a predetermined distance as an obstacle on the basis of the measurement information of the LiDAR sensors 101, 102, the sonar units 103, 104 and the cameras 105, 106. The collision avoidance control unit 111 is configured to perform collision avoidance control for decelerating the tractor 1 or stopping the tractor 1 from traveling when an obstacle is detected by the obstacle detection unit 110. In the collision avoidance control, the collision avoidance control unit 111 not only decelerates the tractor 1 or stops the tractor 1 from traveling, but also activates a notification device 26 such as a notification buzzer and a notification lamp to notify that the obstacle exists. In the collision avoidance control, the collision avoidance control unit 111 communicates from the tractor 1 to the mobile communication terminal 3 by using the communication modules 25 and 53 to display the presence of the obstacle on the display unit 51, so that the collision avoidance control unit 111 can notify that the obstacle exists.

The obstacle detection unit 110 repeats the obstacle detection process based on the measurement information of the LiDAR sensors 101, 102, the sonar units 103, 104 and the cameras 105, 106 in real time, and properly detects an obstacle such as an object and a person. The collision avoidance control unit 111 performs collision avoidance control for avoiding collision with an obstacle that is detected in real time.

The obstacle detection unit 110 and the collision avoidance control unit 111 are provided in the on-board electronic control unit 18. The on-board electronic control unit 18 is communicatively connected to an electronic control unit for the engine, which is included in the common rail system, the LiDAR sensors 101 and 102, the sonar units 103 and 104, the cameras 105, 106, and the like, via a CAN (Controller Area Network).

The LiDAR sensors 101, 102 each measure a distance to an object to be measured on the basis of round-trip time during which laser light (e.g., pulsed near-infrared laser light) hits the object to be measured and returns back (Time of Flight). The LiDAR sensors 101, 102 each measure the distance to the object to be measured in three dimensions by performing scanning with the laser light in the up-down direction and the left-right direction at a high speed and sequentially measuring the distance to the object to be measured at each scanning angle. The LiDAR sensors 101, 102 each repeatedly measure the distance to the object to be measured in a measurement range in real time. The LiDAR sensors 101, 102 are each configured to generate a three-dimensional image from the measurement information and output the generated three-dimensional image externally. The three-dimensional image generated from the measurement information of the LiDAR sensors 101, 102 can be displayed on a display device such as the display unit of the tractor 1 and the display unit 51 of the mobile communication terminal 3 to allow a user or the like to visually recognize whether there is an obstacle. Incidentally, in a three-dimensional image, for example, the distance in the perspective direction can be indicated using colors or the like.

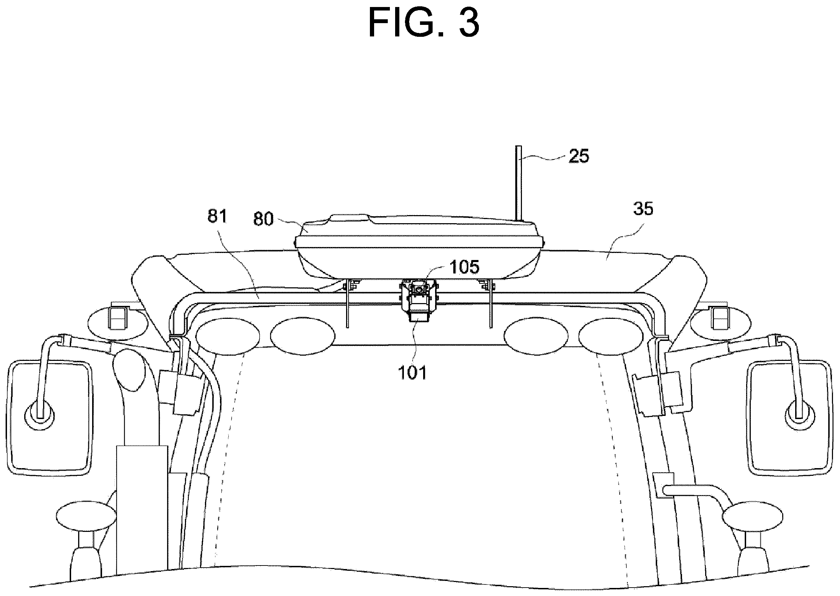

The front LiDAR sensor 101 is mounted on a bottom of the antenna unit 80 disposed at an upper position on the front side of the cabin 10, as illustrated in FIG. 1 and FIG. 3. The antenna unit 80 is mounted on a pipe-shaped antenna unit support stay 81 extending the entire length of the cabin 10 in the left-right direction of the travel machine body 7, as illustrated in FIG. 3. The antenna unit 80 is disposed at a position corresponding to the center of the cabin 10 in the left-right direction of the travel machine body 7. The front LiDAR sensor 101 is mounted on the antenna unit 80 in a forward downward posture in which a forward portion is located lower, and is provided integrally with the antenna unit 80. Similar to the antenna unit 80, the front LiDAR sensor 101 is disposed at a position corresponding to the center of the cabin 10 in the left-right direction of the travel machine body 7.

The front camera 105 is disposed on the upper side of the front LiDAR sensor 101. Similar to the front LiDAR sensor 101, the front camera 105 is mounted in a forward downward posture in which the forward portion is positioned lower. The front camera 105 is provided so as to image the front side of the travel machine body 7 in a state of looking down from the oblique upper side. The front camera 105 is configured to be able to output an image captured by the front camera 105 to an external device. The image captured by the front camera 105 is displayed on the display device such as the display unit of the tractor 1 or the display unit 51 of the mobile communication terminal 3, and enables the user or the like to visually recognize the status in the surroundings of the tractor 1. The front LiDAR sensor 101 and the front camera 105 are disposed at a position corresponding to a roof 35 in the up-down direction.

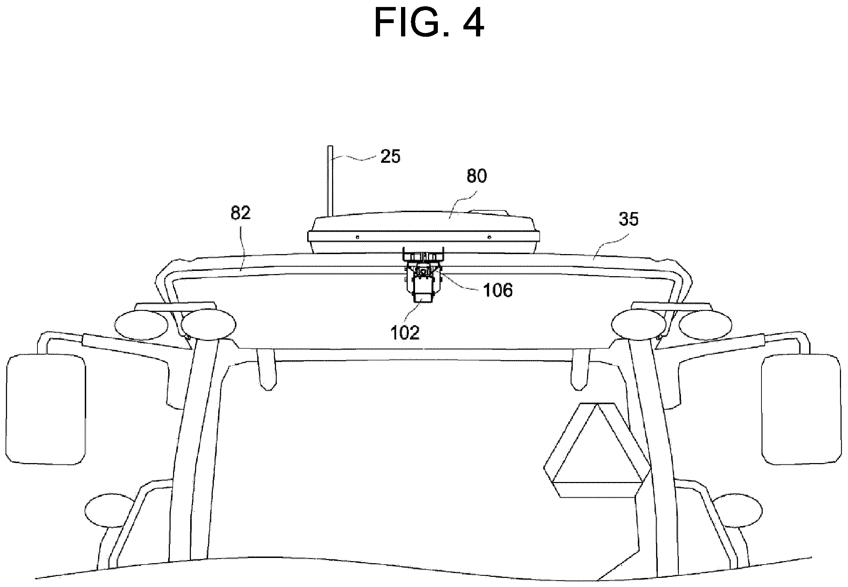

The rear LiDAR sensor 102 is mounted on a pipe-shaped sensor support stay 82 extending the entire length of the cabin 10 in the left-right direction of the travel machine body 7, as illustrated in FIG. 4. The rear LiDAR sensor 102 is disposed at a position corresponding to the center of the cabin 10 in the left-right direction of the travel machine body 7. The rear LiDAR sensor 102 is mounted on the sensor support stay 82 in a rearward downward posture in which a rearward portion is located lower.

The rear camera 106 is disposed on the upper side of the rear LiDAR sensor 102. Similar to the rear LiDAR sensor 102, the rear camera 106 is mounted in a rearward downward posture in which the rearward portion is positioned lower. The rear camera 106 is provided so as to image the rear side of the travel machine body 7 in a state of looking down from the oblique upper side. The rear camera 106 is configured to be able to output an image captured by the rear camera 106 to the external device. The image captured by the rear camera 106 is displayed on the display device such as the display unit of the tractor 1 and the display unit 51 of the mobile communication terminal 3, and enables the user or the like to visually recognize the status in the surroundings of the tractor 1. The rear LiDAR sensor 102 and the rear camera 106 are disposed at a position corresponding to the roof 35 in the up-down direction.

The sonar units 103, 104 are each configured to measure a distance to an object to be measured on the basis of round-trip time during which a ultrasonic wave hits the object to be measured and returns back. As described above, as the sonar units 103, 104, a right side sonar unit 103 that defines the right side of the tractor 1 (travel machine body 7) as a measurement range, and a left side sonar unit 104 that defines the left side of the tractor 1 (travel machine body 7) as a measurement range (see FIG. 1).

For the front side of the tractor 1, the obstacle detection unit 110 detects, for example, the presence or absence of an obstacle on the basis of the measurement information of the front camera 105 as the obstacle detection process, and when the presence of the obstacle is detected, the position of the obstacle is detected on the basis of the measurement information of the front LiDAR sensor 101. For the rear side of the tractor 1, the obstacle detection unit 110 detects, for example, the presence or absence of an obstacle and the presence of the obstacle on the basis of the measurement information of the rear camera 106 as the obstacle detection process on the basis of the measurement information of the rear LiDAR sensor 102, similar to the front side of the tractor 1. For the right side of the tractor 1, the obstacle detection unit 110 detects the existence or absence of an obstacle and the position of the obstacle on the basis of the measurement information of the right side sonar unit 103 as the obstacle detection process, and for the left side of the tractor 1, the obstacle detection unit 110 also detects the existence or absence of an obstacle and the position of the obstacle on the basis of the measurement information of the left side sonar unit 104 as the obstacle detection process.

Hereinafter, the generation of the target travel path P by the travel path generation unit 54 will be described. Before the travel path generation unit 54 generates the target travel path P, a user such as a driver and a manager inputs various information including vehicle body information such as the model of the operation vehicle and the type and the operation width of the operation device 12, exit direction and entry direction information related to the exit direction from the inside of each operation region S to the outside of the operation region S, and the entry direction from the outside of each operation region S to the inside of the operation region S, in accordance with the input guide for setting the target travel path displayed on the display unit 51 of the mobile communication terminal 3, and the input information is stored in the terminal storage unit 55.

The exit direction and entry direction information related to the exit direction from the inside of each operation region S to the outside of the operation region S, and the entry direction from the outside of each operation region S to the inside of the operation region S can be input by operating the display unit 51 (corresponding to an operation tool) by the user, and an exit direction and entry direction information acquisition unit 56 acquires the exit direction and entry direction information from the input information. The user operates the display unit 51 to enable change of the exit direction and the entry direction in the exit and entry direction information, and the exit direction and entry direction information acquisition unit 56 acquires the exit direction and entry direction information on the exit direction and the entry direction after the change. The acquisition of the exit direction and entry direction information is not limited to the input information by a user. For example, the exit direction and entry direction information acquisition unit 56 can acquire the exit direction and entry direction information by reading the exit direction and the entry direction from map information or the like.

Each operation region S where operation is to be performed is defined as a field, and the terminal electronic control unit 52 of the mobile communication terminal 3 acquires field information related to the fields each including the shape and the position of the field and the position of the entrance and exit in the field, and outside-field information related to a region outside the fields including the shape and the position of the outside-field region and a farm road connecting between the field and the field, and stores the above information in the terminal storage unit 55. The terminal electronic control unit 52 acquires the field information and the outside-field information from the map information or the like stored in a database or the like. For example, the field information can be acquired from measurement information or the like when the shape, the position and the like of each operation region are actually measured, and the field information and the outside-field information can be acquired by various methods.

In addition to the input information by the user, in a state in which the field information and the outside-field information acquired by the terminal electronic control unit 52 are stored in the terminal storage unit 55, the travel path generation unit 54 generates the target travel path P by using the field information, the outside-field information, the vehicle body information, and the exit direction and entry direction information stored in the terminal storage unit 55. As illustrated in FIG. 5, when operation is performed in a plurality of operation regions S, the travel path generation unit 54 generates, as the target travel paths P, the operation path P1 for performing operation in each operation region S and the movement path P2 for traveling outside the operation regions S and connecting the operation regions S to each other.

When operation is performed in the plurality of operation regions S, the travel path generation unit 54 generates the target travel path P by performing, by the user, various operations on the display unit 51 in accordance with a display screen displayed on the display unit 51. Hereinafter, the display screen displayed on the display unit 51 will be described as an example.

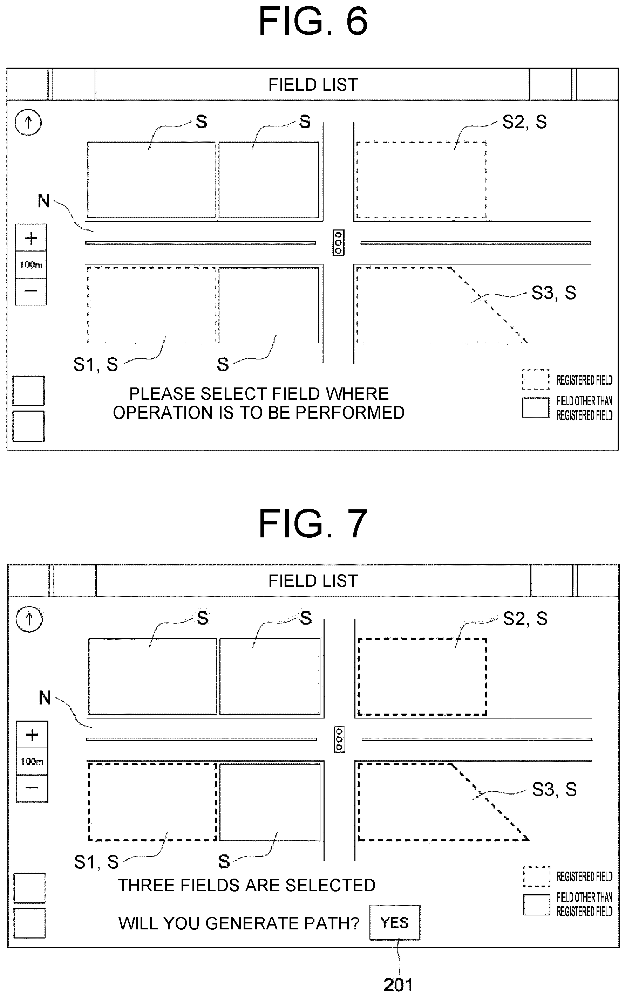

As illustrated in FIG. 6, an operation region selection screen for selecting operation regions S (field) where operation is to be performed is displayed on the display unit 51. In this operation region selection screen, a user can select the operation regions S where operation is to be performed, by touching a part corresponding to the operation regions S (field) where operation is to be performed. FIG. 6 illustrates a state in which three operation regions S, namely, an operation region S1, an operation region S2, and an operation region S3 (the operation regions surrounded by dotted lines in FIG. 6) are selected among a plurality of operation regions S.

When the operation regions S where operation is to be performed are determined in the state illustrated in FIG. 6, for example, as illustrated in FIG. 7, the selected operation regions S1 to S3 (fields) become distinguishable from other operation regions S (surrounded by thick dotted lines in FIG. 7), and the number of the selected operation regions S is also displayed. In the one illustrated in FIG. 7, a selection button 201 enabling selection as to whether or not to generate a target travel path P for performing operation in the selected operation region S is displayed.

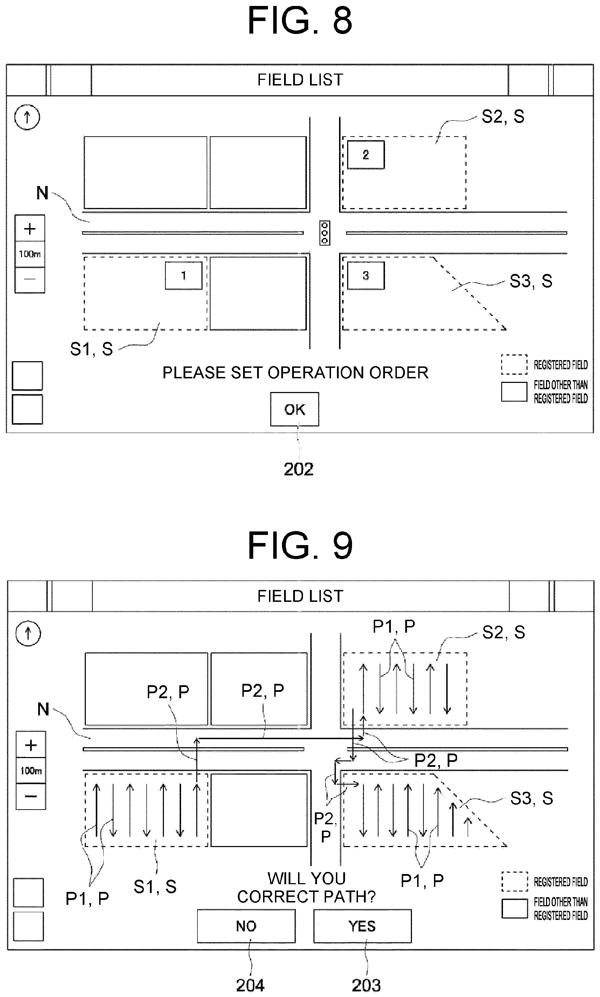

When the user presses and operates the selection button 201 in FIG. 7, the display screen of the display unit 51 is shifted to an operation order selection screen for selecting in what operation order of the selected operation regions S1 to S3 operation is to be performed, as illustrated in FIG. 8. In this operation order selection screen, for example, the operation order can be selected in accordance with the order in which the user touches the operation region S (field), where the operation region S (field) first touched by the user is defined as the first one where operation is to be performed, and the operation region S touched next by the user is defined as the second one where operation is to be performed. In the one illustrated in Fig. 8, the operation region where the first operation is to be performed is defined as the operation region S1, he operation region where the second operation is to be performed is defined as the operation region S2, and the operation region where the third operation is to be performed is defined as the operation region S3.

When the user presses and operates an operation order determination button 202 in FIG. 8, the travel path generation unit 54 generates, as the target travel paths P, the operation paths P1 for performing operation in the operation regions S and the movement path P2 for connecting the operation regions S to each other outside the operation regions S, as illustrated in FIG. 9. The travel path generation unit 54 generates the operation paths P1 and the movement path P2 on the basis of the field information, the outside-field information and the input information by the user (including the vehicle body information, the exit direction and entry direction information and the like) stored in the terminal storage unit 55.

In the one illustrated in FIG. 9, the travel path generation unit 54 generates the operation path P1 as a reciprocal path for reciprocating along the operation direction included in the input information and performing operation, but for example, the operation paths P1 can be a circling path for circling in accordance with the shape of the periphery of the operation region S, and the shape of the path can be changed as appropriate.

The travel path generation unit 54 generates, as the movement path P2, for example, a path obtained by combining a plurality of linear paths to connect an end edge of the operation path P1 in the operation region S where operation is to be first performed to a start edge of the operation path P1 in the operation region S where operation is to be next performed through a farm road N and the like outside the operation regions S.

Herein, in the operation paths P1 and the movement paths P2 illustrated in FIG. 5 and FIG. 9, the start edges and the end edges of the operation paths P1 are set in the operation regions S, and the movement path P2 is the path connecting from the end edge of the operation path P1 in the operation region S where operation is to be first performed to the start edge of the operation path P1 in the operation region S where operation is to be next performed. Consequently, the movement path P1 is generated by combining three path sections, namely a path section from the end edge of the operation path P1 in the operation region S where operation is to be first performed to a boundary portion between the inside and the outside of the operation region S, a path section from the boundary portion between the inside and the outside of the operation region S where operation is to be first performed in the region outside the operation regions S to a boundary portion between the inside and the outside of the operation region S where operation is to be next performed, and a path section from the boundary portion between the inside and the outside of the operation region S where operation is to be next performed to the start edge of the operation path P1.

Accordingly, in the ones illustrated in FIG. 5 and FIG. 9, the movement path P2 is generated not only in the region outside the operation regions S but also in the operation regions S. However, for example, the start edge and the end edge of the operation path P1 are set to the boundary portion between the inside and the outside of the operation regions S, so that the movement path P2 can be generated only outside the operation regions S. Thus, the operation paths P1 and the movement path P2 each only need to be a path for serially performing operation in the operation region S where operation is to be first performed, movement from the operation region S where operation is to be first performed to the operation region S where operation is to be next performed, and the operation in the operation region S where operation is to be next performed, and the travel path generation unit 54 can appropriately change how to generate the operation paths P1 and the movement path P2.

FIG. 9 illustrates a case where the direction of exit from the operation region S1 is defined as the up-down direction, the direction of entry into the operation region S2 and the direction of exit from the operation region S2 are defined as the up-down direction, and the direction of entry into the operation region S3 is defined as the left-right direction. The travel path generation unit 54 generates the movement path P2 connecting the operation region S1 and the operation region S2, and the movement path P2 connecting the operation region S2 and the operation region S3. For the movement path P2 connecting the operation region S1 and the operation region S2, the direction of exit from the operation region S1 is defined as the up-down direction and the direction of entry into the operation region S2 is defined as the up-down direction. For the movement path P2 connecting the operation region S2 and the operation region S3, the direction of exit from the operation region S2 is defined as the up-down direction, and the direction of entry into the operation region S3 is defined as the left-right direction. Thus, the travel path generation unit 54 generates the movement path P2 according to the exit direction and entry direction information.

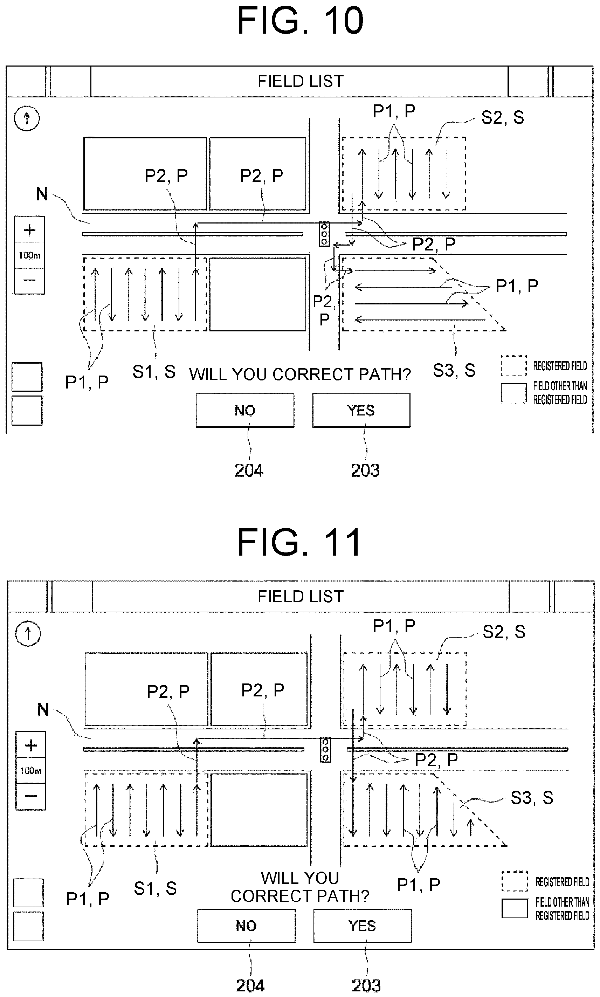

The travel path generation unit 54 can correct the generated operation paths P1 and movement path P2 in response to correct operation (change operation) by a user or the like. As illustrated in FIG. 10, when the user corrects (changes) the operation direction in the operation region S3 from the up-down direction (see FIG. 9) to the left-right direction in the display unit 51, the travel path generation unit 54 corrects the operation path P1 to a path for performing reciprocating operation along the left-right direction in accordance with the corrected operation direction.

As illustrated in FIG. 11, when the user corrects the direction of entry of the tractor 1 into the operation region S3 from the left-right direction (see FIG. 9) to the up-down direction, the travel path generation unit 54 corrects the movement path P2 to a path for entering the operation region S3 in the up-down direction in accordance with the corrected entry direction.

Thus, when the operation direction in the operation region S and the direction of entry into the operation region S and the direction of exit from the operation region S are corrected (changed) by the user, the travel path generation unit 54 corrects the operation path P1 and the movement path P2 on the basis of the corrected (changed) information. In the screen illustrated in FIG. 10 or FIG. 11, when a "Yes" button 203 is pressed and operated, the operation path P1 and the movement path P2 corrected by the travel path generation unit 54 are determined to be the target travel path P when the tractor 1 performs automatic travel. In the screen illustrated in FIG. 9, FIG. 10 or FIG. 11, a "No" button 204 is pressed and operated, the operation path P1 and the movement path P2 before being corrected by the travel path generation unit 54 are displayed on the display unit 51, and the operation path P1 and the movement path P2 before being corrected are determined to be the target travel path P when the tractor 1 performs automatic travel.

The target travel path P (the operation path P1 and the movement path P2) generated by the travel path generation unit 54 can be displayed on the display unit 51 and are stored in the terminal storage unit 55 as path information associated with various information such as field information. The path information includes the azimuth angle of the target travel path P, the set engine rotating velocity and the target travel speed set in accordance with a traveling mode of the tractor 1 on the target travel path P, and the like. The on-board electronic control unit 18 causes the tractor 1 to automatically travel along the target travel path P in a state in which the tractor 1 is controlled to the set engine speed, the target travel speed, and the like, by acquiring the path information.

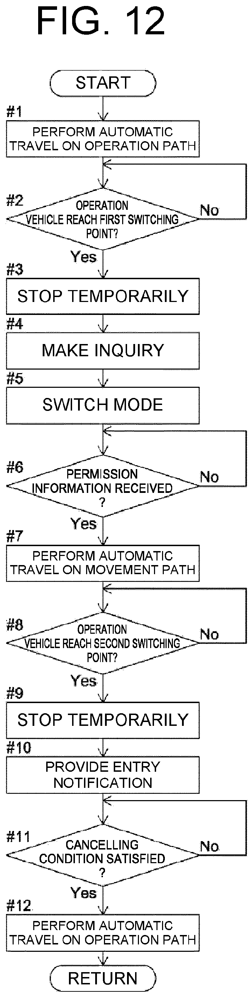

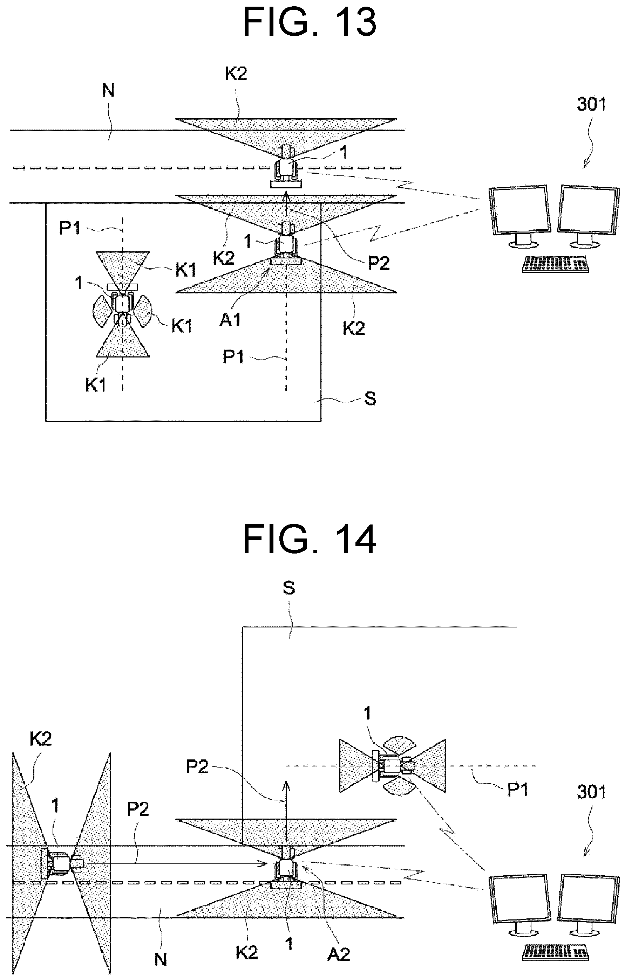

Motion when the tractor 1 automatically travels in a case where operation is performed in a plurality of the operation regions S will be described with reference to the flowchart in FIG. 12, and FIG. 13 and FIG. 14. FIG. 13 schematically illustrates automatic travel on the operation path P1 in the operation region S and a state when the tractor 1 exits from the inside of the operation region S to the outside of the operation region S. FIG. 13 schematically illustrates the state of automatic travel on a movement path P2 outside the operation region S and the state when the tractor 1 enters the operation region S.

When a user or the like moves the tractor 1 to the start point of the operation region S where first operation is to be performed, and starts automatic travel, the on-board electronic control unit 18 first causes the tractor 1 to automatically travel along the operation path P1 of the operation region S in a state in which the operation device 12 performs predetermined operation (Step #1 in FIG. 12), as illustrated in FIG. 13.

At this time, as illustrated in FIG. 13, the tractor 1 automatically travels along the operation path P1 in the operation region S, and therefore the on-board electronic control unit 18 sets the obstacle detection system 100 to an in-operation-region mode. The obstacle detection unit 110 sets measurement ranges of the LiDAR sensors 101, 102, the sonar units 103, 104 and the cameras 105, 106 to first predetermined ranges K1 (ranges illustrated in gray in FIG. 13) for the in-operation-region mode, and performs an obstacle detection process for detecting whether or not an obstacle exists within the first predetermined ranges K1. As to the first predetermined ranges K1, the front and rear of the tractor 1 indicate the measurement ranges of the cameras 105, 106, and the left and right of the tractor 1 indicate the measurement ranges of the sonar units 103, 104. As described above, the collision avoidance control unit 111 performs collision avoidance control, such as decelerating the tractor 1 or stopping the tractor 1 from traveling, when the obstacle is detected by the obstacle detection unit 110. Thus, the tractor 1 automatically travel along the operation path P1 to perform the predetermined operation while avoiding contact with an obstacle in the operation region S.

When the tractor 1 reaches a first switching point A1 for switching a traveling path where the tractor 1 is to be caused to automatically travel from a path inside the operation region S to a path outside the operation regions S as illustrated in FIG. 13, by causing the tractor 1 to automatically travel along the operation path P1, the on-board electronic control unit 18 causes the tractor 1 to temporarily stop (Step #3 in the case of Yes in Step #2 in FIG. 12). The first switching point A1 can be a point at which a path section inside the operation region S is switched to a path section outside the operation regions S in the movement path P2, such as the end edge of the operation path P1 that is switched from the operation path P1 to the movement path P2, and a boundary between the inside and the outside of the operation region S. In a state in which the tractor 1 is temporarily stopped, the on-board electronic control unit 18 makes an inquiry to the monitoring center 301 that monitors a traveling status and the like of the tractor 1 about automatic travel permission as to whether or not automatic travel on the path outside the operation regions S is to be permitted, by using the communication module 25 or the like (Step #4 in FIG. 12).

As illustrated in FIG. 13, in the state in which the tractor 1 is temporarily stopped, the on-board electronic control unit 18 makes an inquiry about the automatic travel permission and switches the obstacle detection system 100 from the in-operation-region mode to an outside-operation-region mode to raise a monitoring level (Step #5 in FIG. 12). In the outside-operation-region mode, the obstacle detection unit 110 sets measurement ranges of the LiDAR sensors 101, 102, the sonar units 103, 104 and the cameras 105, 106 (corresponding to a surrounding monitoring device) to second predetermined ranges K2 (ranges illustrated in gray in FIG. 13) for the outside-operation-region mode, and performs an obstacle detection process for detecting whether or not an obstacle exists within the second predetermined ranges K2. The second predetermined ranges K2 for the outside-operation-region mode are set to wider ranges in the front-rear direction and the left-right direction than the first predetermined ranges K1 for the in-operation-region mode. Consequently, in the outside-operation-region mode, the monitoring level is raised by widening the measurement ranges for detecting an obstacle with respect to the measurement ranges for the in-operation-region mode, and an obstacle farther away from the tractor 1 is detected.

In the one illustrated in FIG. 13, a case where the first predetermined range K1 is widened to the second predetermined range K2 on the front and rear sides of the tractor 1 is illustrated. Incidentally, for the tractor 1 located on the most upper side, the second predetermined range K2 on the rear side overlaps on the second predetermined range K2 on the front side of the tractor 1 located at the second from the upper side, and therefore the second predetermined range K2 on the rear side is omitted. For example, by widening of the angle of view of each of the front camera 105 and the rear camera (e.g., widening of the angle of view from 70 degrees to 200 degrees), the first predetermined range K1 can be widened to the second predetermined range K2. Incidentally, as FIG. 13 does not illustrate the measurement ranges of the LiDAR sensors 101, 102 and the sonar units 103, 104 other than the cameras 105, 106, but illustrates an state in which these measurement devices are not activated, as in the in-operation-region mode, the LiDAR sensors 101, 102 and the sonar units 103, 104 other than the cameras 105, 106 can also be activated, and detect obstacles in the front and rear, and the left and right of the tractor 1. The direction in which the second predetermined range K2 is widened (front-rear direction and left-right direction) with respect to the first predetermined range K1 can be changed as appropriate.

In this embodiment, when the mode between the in-operation-region mode and the outside-operation-region mode is switched, the measurement range is changed using the same measurement device such as the camera 105. However, the obstacle detection system 100 can include, for example, a millimeter wave radar capable of detecting an obstacle at a distance from the tractor 1, in addition to the LiDAR sensors 101, 102, the sonar units 103, 104 and the cameras 105, 106, and can switch the measurement device for detecting an obstacle to a different measurement device when the mode is switched between the in-operation-region mode and the outside-operation-region mode. For example, in the in-operation-region mode, an obstacle can be detected using the measurement devices, namely the LiDAR sensors 101, 102, the sonar units 103, 104 and the cameras 105, 106, and in the outside-operation-region mode, an obstacle can be detected using the millimeter-wave radar.

In a monitoring center 301, as illustrated in FIG. 13, a monitor monitors a status of the outside of the operation regions S such as the farm road N, on the basis of various information such as images captured by a monitoring camera and road information. When in the monitoring center 301, the inquiry about the automatic travel permission is received from the tractor 1, and the monitor determines that the status allows the tractor 1 to travel automatically outside the operation regions S, permission information to permit the tractor 1 to automatically travel is transmitted. When the on-board electronic control unit 18 receives the permission information from the monitoring center 301, and it is assumed that a condition for canceling temporal stop is satisfied, the on-board electronic control unit 18 switches the traveling path where the tractor 1 is to be caused to automatically travel from the path inside the operation region S to the path outside the operation regions S, and causes the tractor 1 to automatically travel along the movement path P2 (Step #7 in the case of Yes in Step #6 in FIG. 12).

When automatic travel is performed on the movement path P2, the transmission control unit 181 of the on-board electronic control unit 18 can switch the transmission device 13 to a high speed state, so that the tractor 1 can be caused to automatically travel in the high speed state, and the operation device control unit 183 of the on-board electronic control unit 18 controls the clutch operation mechanism 16 and the lift driving mechanism 17 such that the operation of the operation device 12 is stopped.

When the tractor 1 is caused to travel automatically on the movement path P2 outside the operation regions S, the tractor 1 is caused to automatically travel while the traveling status of the tractor 1 is intensively monitored in the monitoring center 301 as described above. When the tractor 1 includes an Intelligent Transport System (ITS) in which various information such as a status of a roadway such as the farm road N is grasped and freely transmitted externally, the on-board electronic control unit 18 of the tractor 1 transmits and receives various types of information to and from the Intelligent Transport System, so that it is possible to grasp the status of a roadway such as the farm road N. Therefore, in addition to or instead of the monitoring by the monitoring center 301, the on-board electronic control unit 18 can cause the tractor 1 to automatically travel in accordance with the status of the roadway such as the farm road N acquired from the Intelligent Transport System.

As illustrated in FIG. 13, when the tractor 1 automatically travels on the movement path P2, the traveling status and the like of the tractor 1 are always monitored in the monitoring center 301, and the tractor 1 automatically travels on the movement path P2 while being intensively monitored in the monitoring center 301. At this time, the mode of the obstacle detection system 100 is switched to the out-of-operation-region mode, and the tractor 1 is automatically traveling while detecting the presence or absence of an obstacle over a wider region compared to the case in the in-operation-region mode.

When the tractor 1 reaches a second switching point A2 for switching a traveling path where the tractor 1 is to be caused to automatically travel from a path outside the operation regions S to a path inside the operation region S as illustrated in FIG. 14, by causing the tractor 1 to automatically travel along the movement path P2, the on-board electronic control unit 18 causes the tractor 1 to temporarily stop (Step #9 in the case of Yes in Step #8 in FIG. 12). The second switching point A2 can be a point at which a path section outside the operation regions S in the movement path P2 such as a point on the farm road N in the movement path P2, and a boundary between the inside and the outside of the operation region S is switched to a path section inside the operation region S. The on-board electronic control unit 18 provides the monitoring center 301 with an entry notification for entry into the operation region S by using the communication module 25 or the like in a state in which the tractor 1 is temporarily stopped (Step #10 in FIG. 12).

When the condition for canceling temporal stop is satisfied by the elapse of predetermined time after the tractor 1 is temporarily stopped or by reception of a notice of permission to enter the operation region S from the monitoring center 301, the on-board electronic control unit 18 switches the traveling path where the tractor 1 is to be caused to automatically travel from the path outside the operation regions S to the path inside the operation region S as illustrated in FIG. 14, and causes the tractor 1 to automatically travel along the path section inside the operation region S and the operation path P1 in the movement path P2 (Step #12 in the case of Yes in Step #11 in FIG. 12). When the tractor travels automatically on the path section in the operation region S in the movement path P2 and on the operation path P1, the on-board electronic control unit 18 sets the obstacle detection system 100 to the in-operation-region mode and is caused the tractor 1 to automatically travel along the operation path P1 in a state in which the operation device 12 performs predetermined operation.

As illustrated in the flowchart in FIG. 12, operation is performed in a plurality of the operation regions S by repeating motion of automatically traveling on the operation path P1 in the operation region S, automatically traveling on the movement path P2 between the operation region S and the next operation region S, and automatically traveling on an operation path P1 in the next operation region S.

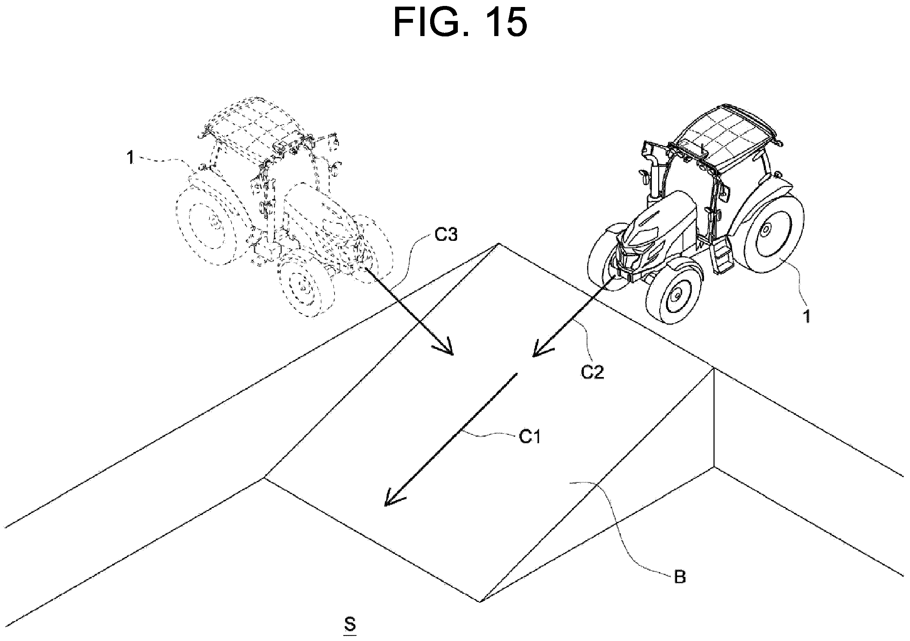

When the tractor 1 is caused to automatically travel to exit outside the operation regions S, or when the tractor 1 is caused to automatically travel to enter the operation region S (see Fig. 15), the tractor 1 may not be able to exit or enter the operation region S by automatically traveling due to an input error or change in the status of the entrance/exit B of the operation region S. Even in such a case, a configuration for continuing automatically traveling is provided, and therefore description will be made below.

As described above, the LiDAR sensors 101, 102 and the cameras 105, 106 (corresponding to an entrance/exit status detection unit) are provided as measurement devices for measuring the status around the tractor 1. When the tractor 1 is caused to automatically travel to exit outside the operation regions S, or when the tractor 1 is caused to automatically travel to enter the operation region S (see FIG. 15), the status of the entrance/exit B in the operation region S can be grasped from the measurement information of the LiDAR sensors 101, 102 and the cameras 105, 106.

FIG. 15 illustrates a case where the tractor 1 enters the operation region S. From the measurement information of the LiDAR sensors 101, 102 and the cameras 105, 106, it is possible to grasp what kind of status the entry directions C2, C3 of the tractor 1 are with respect to the possible entry direction C1 at the entrance/exit B in the operation region S. As illustrated by solid lines in FIG. 15, when the entry direction C2 of the tractor 1 matches the entry direction C1 at the entrance/exit B, the tractor 1 can enter the operation region S. On the other hand, as illustrated by dotted lines in FIG. 15, when the entry direction C3 of the tractor 1 is different from the possible entry direction C1 at the entrance/exit B, the tractor 1 cannot enter the operation region S. A case where the tractor 1 exits outside the operation regions S is the same as the case where the tractor 1 enters the operation region S, and therefore illustration is omitted.

Therefore, as illustrated in FIG. 2, the terminal electronic control unit 52 includes an exit direction and entry direction correction unit 57 that can correct the exit direction from the inside of the operation region S to the outside of the operation region S and the entry direction from the outside of the operation region S to the inside of the operation region S on the basis of the measurement information of the LiDAR sensors 101, 102 and the cameras 105, 106. The exit direction and entry direction correction unit 57 acquires the measurement information of the LiDAR sensors 101, 102 and the cameras 105, 106 by using the communication modules 25, 53, and the like, and determines from the measurement information whether or not the entry direction C2 of the tractor 1 matches the possible entry direction C1 at the entrance/exit B.

The exit direction and entry direction correction unit 57 does not correct the exit direction and the entry direction when the entry direction C2 of the tractor 1 matches the possible entry direction C1, and corrects the exit direction and the entry direction when the entry direction C3 of the tractor 1 differs from the possible entry direction C1. In the one illustrated in FIG. 15, when the tractor 1 exists at a position indicated by the dotted line, the entry direction C3 of the tractor 1 is different from the possible entry direction C1. Therefore, at this time, the exit direction and entry direction correction unit 57 corrects the entry direction C3 to the entry direction C2. Incidentally, when the entry direction C3 of the tractor 1 is different from the possible entry direction C1, an inquiry is made to the monitoring center 301 or the like as to whether it is permissible to correct the exit direction and the entry direction. When permission to correct the exit direction and the entry direction is obtained from the monitoring sensor 301, the exit direction and entry direction correction unit 57 corrects the exit direction and the entry direction.

Thus, when the exit direction or the entry direction is corrected by the exit direction and entry direction correction unit 57, the travel path generation unit 54 is configured to be able to correct the movement path P2 on the basis of the corrected exit direction and entry direction. The travel path generation unit 54 corrects the movement path P2 such that the exit direction and the entry direction of the movement path P2 match the corrected exit direction and the entry direction (see FIG. 11 where the entry direction is corrected with respect to the movement path P2 of FIG. 9). The travel path generation unit 54 corrects the movement path P2, so that the on-board electronic control unit 18 can acquire the path information corresponding to the corrected movement path P2, and cause the tractor 1 to automatically travel along the corrected movement path P2. Accordingly, the on-board electronic control unit 18 can change the exit and entry directions from the initial exit and entry directions, and cause the tractor 1 to automatically travel to exit outside the operation regions S and cause the tractor 1 to automatically travel to enter the operation region S.

In this embodiment, the tractor 1 is caused to automatically travel not only on the operation path P1 in the operation region S but also on the movement path P2 outside the operation regions S, and therefore conditions for stopping the travel during the automatic travel are made different.

The tractor 1 performs predetermined operation when automatically traveling on the operation path P1 in the operation region S. Therefore, when the on-board electronic control unit 18 determines that the travel position of the tractor 1 deviates from the operation path P1 by a predetermined distance or more, or determines that failure related to operation occurs, the tractor 1 is stopped from traveling. In contrast, in the case of automatic traveling on the movement path P2 outside the operation regions S, when the on-board electronic control unit 18 determines that the travel position of the tractor 1 does not deviate from a lane of the farm road N or the like even when the travel position of the tractor 1 deviates from the movement path P2, the automatic traveling of the tractor 1 is continued. When the on-board electronic control unit 18 determines that the travel position of the tractor 1 deviates from the lane, the tractor 1 is stopped from traveling. The on-board electronic control unit 18 continues the automatic travel of the tractor 1 even when there is failure not related to travel on a roadway such as the farm road N. The on-board electronic control unit 18 stops the tractor 1 from traveling when there is a failure related to travel on a roadway.

When the positioning unit 21 cannot acquire appropriate positioning information, in the case of automatically traveling on the operation path P1 in the operation region S, automatic travel of the tractor 1 is continued until travel is performed by a predetermined distance or until predetermined time elapses, and the tractor 1 is stopped from traveling after the travel is performed by the predetermined distance or after the predetermined time elapses. In contrast, when the tractor travels automatically on the movement path P2 outside the operation regions S, the tractor 1 is immediately stopped from traveling when appropriate positioning information cannot be acquired. Incidentally, when it is possible to continue the automatic travel of the tractor 1 from the measurement information of the cameras 105, 106 provided in the tractor 1, the automatic travel of the tractor 1 can also be continued.

### [Other Embodiments]

Other embodiments of the present invention will be described. A configuration of each embodiment described below can be applied not only independently but also in combination with the configurations of other embodiments.
(1)The configuration of the operation vehicle can be changed in various manners. For example, the operation vehicle may be configured as a hybrid specification with an engine 9 and an electric motor for traveling, or may be configured as an electric specification with an electric motor for traveling in place of the engine 9. For example, the operation vehicle may be configured as a semi-crawler specification with left and right crawlers instead of the left and right rear wheels 6 as the travel unit. For example, the operation vehicle may be configured with a rear wheel steering specification in which the left and right rear wheels 6 function as steering wheels.
(2)In the above embodiment, the travel path generation unit 54, the exit direction and entry direction information acquisition unit 56, and the exit direction and entry direction correction unit 57 are provided in the mobile communication terminal 3. However, the travel path generation unit 54, the exit direction and entry direction information acquisition unit 56 and the exit direction and entry direction correction unit 57 can be provided in the tractor 1 (operation vehicle) or an external management device.
(3)In the above embodiment, the mobile communication terminal 3 is operated, so that the generation of the target travel path, the instruction of the automatic travel start, or the like is performed, and the operation vehicle is caused to automatically travel. However, for example, as described in the above (2), the travel path generation unit 54, the exit direction and entry direction information acquisition unit 56, the exit direction and entry direction correction unit 57, and the like are provided in the external monitoring center, the monitoring device, or the like, and the generation of the target travel path, the instruction of the automatic travel start, or the like is performed by the monitoring sensor or the monitoring device, so that the operation vehicle can automatically travel.

### [Appendix of the Invention]

A first characteristic configuration of the present invention is to include a path generation unit that generates an operation path for each of a plurality of operation regions, and an automatic travel control unit that causes an operation vehicle to automatically travel along each of the operation paths generated by the path generation unit, in which the path generation unit is capable of generating a movement path that connects the operation regions by causing the operation vehicle to travel outside the operation regions, and the automatic travel control unit temporarily stops the operation vehicle before switching a traveling path where the operation vehicle is to be caused to automatically travel from a path inside the operation regions to a path outside the operation regions, and causes the operation vehicle to automatically travel by switching the traveling path to the path outside the operation regions when the temporal stop state is cancelled.

According to the present configuration, the path generation unit generates not only the operation path for the operation regions, but also the movement path connecting the operation regions by causing the operation vehicle to travel outside the operation regions and, and therefore the automatic travel control unit can not only cause the operation vehicle to automatically travel on the operation path, but also cause the operation vehicle to automatically travel on the movement path. Consequently, when operation is performed in the plurality of operation regions, not only operation in the operation regions but also movement between the operation regions can be performed by automatic travel by the operation vehicle, and it is possible to improve operation efficiency.

In addition, the automatic travel control unit temporarily stops the operation vehicle before switching the traveling path where the operation vehicle is to be caused to automatically travel from the path inside the operation regions to the path outside the operation regions, and therefore it can be confirmed in advance whether or not safety and the like can be ensured even if the automatic travel is performed on the path outside the operation regions, before causing the operation vehicle to automatically travel on the path outside the operation regions. Accordingly, the automatic travel control unit can perform automatic travel on the path outside the operation regions after the temporal stop state is cancelled, so that automatic travel on the path outside the operation regions can be performed appropriately while ensuring safety.

A second characteristic configuration of the present invention is that the automatic travel control unit temporarily stops the operation vehicle before switching the traveling path where the operation vehicle is to be caused to automatically travel from the path outside the operation regions to the path inside the operation regions, and when the temporal stop state is cancelled, the automatic travel control unit switches the traveling path to the path inside the operation regions and causes the operation vehicle to automatically travel on the path inside the operation region.

According to the present configuration, the automatic travel control unit temporarily stops the operation vehicle before switching the traveling path where the operation vehicle is to be caused to automatically travel from the path outside the operation regions to the path inside the operation regions, and therefore it can be confirmed in advance whether or not operation is prepared even if the automatic travel automatically travels on the path inside the operation regions. Accordingly, the automatic travel control unit can perform automatic travel on the path inside the operation regions after the temporal stop state is cancelled, so that automatic travel on the path inside the operation regions can be performed appropriately in a state in which the preparation of the operation and the like are completed, and the operation can be efficiently performed.

A third characteristic configuration of the present invention is that the path generation unit generates the movement path on the basis of an exit direction from inside the operation regions to outside the operation regions, and an entry direction from outside the operation regions to inside the operation regions, and the exit direction and the entry direction are changeable on the basis of predetermined operation by an operation tool.

According to the present configuration, a user or the like can appropriately change and set the exit direction from inside the operation regions to outside the operation regions and the entry direction from outside the operation regions to inside the operation regions by performing the predetermined operation with the operation tool. The path generation unit generates the movement path on the basis of the corrected exit direction and entry direction, and therefore the path generation unit can generate the movement path in which the exit direction and the entry direction are set to appropriate directions. Accordingly, when the operation vehicle is caused to automatically travel on the movement path, both the exit direction from inside the operation regions to outside the operation regions and the entry direction from outside the operation regions to inside the operation regions can be set to appropriate directions, and it is possible to appropriately exit from the operation region, and enter the operation region.

A fourth characteristic configuration of the present invention is that the operation vehicle includes an entrance/exit status detection unit that detects a status of an entrance/exit in the operation regions, the operation vehicle includes an exit direction and entry direction correction unit that is capable of correcting an exit direction from inside the operation regions to outside the operation regions, and an entry direction from outside the operation regions to inside the operation regions, on the basis of detection information of the entrance/exit status detection unit, and when the exit direction and entry direction correction unit corrects the exit direction or the entry direction, the path generation unit is capable of correcting the movement path on the basis of corrected exit direction or corrected entry direction.

For example, the user may not be able to exit from the operation region in the already set exit direction or enter the operation region in the already set entry direction due to a user input error or change in the status of the entrance/exit of the operation region.

Therefore, according to the present configuration, in a case of exit from the operation region, and in a case of entry into the operation region, the status of the entrance/exit can be grasped on the basis of the detection information of the entrance/exit status detection unit, and therefore the exit direction and entry direction correction unit can determine whether or not it is possible to exit in the exit direction already set, and whether or not it is possible to enter in the entry direction already set. When the exit direction and entry direction correction unit determines that it is not possible to exit in the already set exit direction, the exit direction can be corrected on the basis of the grasped entrance/exit status. When the exit direction and entry direction correction unit determines that it is not possible to enter in the already set entry direction, the entry direction can be corrected on the basis of the grasped entrance/exit status.

Thus, when the exit direction and entry direction correction unit corrects the exit direction or the entry direction, the path generation unit can correct the movement path on the basis of the corrected exit direction or the corrected entry direction. Therefore, even when it is not possible to exit the operation region in the already set exit direction or enter the operation region in the already set entry direction due to a user input error or change in the status of the entrance/exit of the operation region, the automatic travel control unit causes the operation vehicle to automatically travel on the corrected movement path, so that it is possible to perform appropriately exit from the operation region, and appropriately enter the operation region.

A fifth characteristic configuration of the present invention is that the operation vehicle includes a surrounding monitoring device that monitors a status of a surrounding thereof, and when the operation vehicle automatically travels along the path outside the operation regions, the surrounding monitoring device raises a monitoring level compared to a case where the operation vehicle automatically travels along the path inside the operation regions.

In a case of performing automatic travel on the path inside the operation regions, even when there is an obstacle that hinders the automatic travel of the operation vehicle, the obstacle is often a fixed object such as a wall and a telegraph pole. Even when the obstacle is a person or other object that moves, the movement speed is relatively slow. In contrast, when automatic travel is performed on the path outside the operation regions, the obstacle includes other vehicles and the like, and the movement speed is relatively fast.

Therefore, according to the present configuration, when the operation vehicle automatically travels along the path outside the operation regions, the surrounding monitoring device raises the monitoring level compared to the case where the operation vehicle automatically travels along the path inside the operation regions. For example, by widening the monitoring range by the surrounding monitoring device and raising the monitoring level of the surrounding monitoring device, even when there is an obstacle of a fast movement speed, the obstacle can be detected at a position away from the operation vehicle, and it is possible to appropriately prevent contact with the obstacle. Thus, when the operation vehicle automatically travels along the path outside the operation regions, the monitoring level of the surrounding monitoring device can be raised, so that it is possible to allow the operation vehicle to travel automatically while appropriately preventing contact with the obstacle and the like.

## Claims

1. An automatic travel system comprising:
a path generation unit (54) **that** is configured to generate an operation path (P1) for each of a plurality of operation regions (S); and
an automatic travel control unit that is configured to cause an operation vehicle (1) to automatically travel along each of the operation paths (P1) generated by the path generation unit (54), wherein
the path generation unit (54) is capable of generating a movement path (P2) that connects the operation regions (S) by causing the operation vehicle (1) to travel outside the operation regions (S), and **characterized in that**
the automatic travel control unit **is** configured to temporarily stop the operation vehicle (1) before switching a traveling path where the operation vehicle (1) is to be caused to automatically travel from a path inside the operation regions (S) to a path outside the operation regions (S), and **to** cause the operation vehicle (1) to automatically travel by switching the traveling path to the path outside the operation regions (S) when the temporal stop state is cancelled by receiving permission information.

2. The automatic travel system according to claim 1, wherein
the automatic travel control unit **is** configured to temporarily stop soups the operation vehicle (1) before switching the traveling path where the operation vehicle (1) is to be caused to automatically travel from the path outside the operation regions (s) to the path inside the operation regions, and **to** cause the operation vehicle (1) to automatically travel by switching the traveling path to the path inside the operation regions (S) when the temporal stop state is cancelled.

3. The automatic travel system according to claim 1 or 2, wherein
the path generation unit (54) **is** configured to generate the movement path (P2) on the basis of an exit direction from inside the operation regions (S) to outside the operation regions, and an entry direction from outside the operation regions (S) to inside the operation regions (S), and the exit direction and the entry direction are changeable on the basis of predetermined operation by an operation tool.

4. The automatic travel system according to any one of claims 1 to 3, wherein
the operation vehicle (1) includes an entrance/exit status detection unit that **is** configured to detect a status of an entrance/exit in the operation regions (S),
the operation vehicle (1) includes an exit direction and entry direction correction unit that is capable of correcting an exit direction from inside the operation regions (S) to outside the operation regions (S), and an entry direction from outside the operation regions to inside the operation regions, on the basis of detection information of the entrance/exit status detection unit, and
when the exit direction and entry direction correction unit corrects the exit direction or the entry direction, the path generation unit (54) is capable of correcting the movement path (P2) on the basis of corrected exit direction and entry direction.

5. The automatic travel system according to any one of claims 1 to 4, wherein
the operation vehicle (1) includes a surrounding monitoring device (105, 106) that **is** configured to monitor a status of a surrounding thereof, and
when the operation vehicle (1) automatically travels along the path outside the operation regions (S), the surrounding monitoring device (104, 105) **is** configured to raise a monitoring level compared to a case where the operation vehicle (1) automatically travels along the path inside the operation regions (S).

## Patentansprüche

1. Automatisches Fahrsystem, umfassend:
eine Pfaderzeugungseinheit (54), die dazu konfiguriert ist, einen Betriebspfad (P1) für jede einer Vielzahl von Betriebsregionen (S) zu erzeugen; und
eine automatische Fahrsteuereinheit, die dazu konfiguriert ist, zu veranlassen, dass ein Betriebsfahrzeug (1) automatisch entlang jedem der von der Pfaderzeugungseinheit (54) erzeugten Betriebspfade (P1) fährt, wobei
die Pfaderzeugungseinheit (54) dazu fähig ist, einen Bewegungspfad (P2) zu erzeugen, der die Betriebsregionen (S) verbindet, indem das Betriebsfahrzeug (1) dazu veranlasst wird, außerhalb der Betriebsregionen (S) zu fahren, und **dadurch gekennzeichnet ist, dass**
die automatische Fahrsteuereinheit dazu konfiguriert ist, das Betriebsfahrzeug (1) vor dem Umschalten eines Fahrpfades zeitweilig anzuhalten, wodurch das Betriebsfahrzeug (1) veranlasst werden soll, automatisch von einem Pfad innerhalb der Betriebsregionen (S) zu einem Pfad außerhalb der Betriebsregionen (S) zu fahren, und dazu, dass das Betriebsfahrzeug (1) durch Umschalten des Fahrpfades automatisch auf den Pfad außerhalb der Betriebsregionen (S) fährt, wenn der zeitweilige Anhaltezustand durch Empfangen von Genehmigungsinformationen gelöscht wird.

2. Automatisches Fahrsystem nach Anspruch 1, wobei
die automatische Fahrsteuereinheit dazu konfiguriert ist, das Betriebsfahrzeug (1) vor dem Umschalten des Fahrpfades zeitweilig anzuhalten, wobei das Betriebsfahrzeug (1) veranlasst werden soll, automatisch von dem Pfad außerhalb der Betriebsregionen (S) zu dem Pfad innerhalb der Betriebsregionen zu fahren, und dazu, dass das Betriebsfahrzeug (1) durch Umschalten des Fahrpfades automatisch auf den Pfad innerhalb der Betriebsregionen (S) fährt, wenn der zeitweilige Anhaltezustand gelöscht wird.

3. Automatisches Fahrsystem nach Anspruch 1 oder 2, wobei
die Pfaderzeugungseinheit (54) dazu konfiguriert ist, den Bewegungspfad (P2) auf Basis einer Ausfahrtrichtung von innerhalb der Betriebsregionen (S) zu außerhalb der Betriebsregionen und einer Einfahrtrichtung von außerhalb der Betriebsregionen (S) zu innerhalb der Betriebsregionen (S) zu erzeugen, und bei dem die Ausfahrtrichtung und die Einfahrtrichtung auf Basis eines vorbestimmten Betriebs durch ein Betriebswerkzeug verändert werden können.

4. Automatisches Fahrsystem nach einem der Ansprüche 1 bis 3, wobei
das Betriebsfahrzeug (1) eine Einfahrts-Ausfahrtstatus-Erkennungseinheit beinhaltet, die dazu konfiguriert ist, einen Status einer Einfahrt /einer Ausfahrt in den Betriebsregionen (S) zu erkennen,
das Betriebsfahrzeug (1) eine Ausfahrtrichtungs- und Einfahrtrichtungskorrektureinheit beinhaltet, die dazu fähig ist, eine Ausfahrtrichtung von innerhalb der Betriebsregionen (S) zu außerhalb der Betriebsregionen (S) und eine Einfahrtrichtung von außerhalb der Betriebsregionen zu innerhalb der Betriebsregionen auf Basis von Erkennungsinformationen der Einfahrts-/Ausfahrtstatus-Erkennungseinheit zu korrigieren, und
wenn die Ausfahrtrichtungs- und Einfahrtrichtungskorrektureinheit die Ausfahrtrichtung oder die Einfahrtrichtung korrigiert, die Pfaderzeugungseinheit (54) dazu fähig ist, den Bewegungspfad (P2) auf Basis einer korrigierten Ausfahrtrichtung und Einfahrtrichtung zu korrigieren.

5. Automatisches Fahrsystem nach einem der Ansprüche 1 bis 4, wobei
das Betriebsfahrzeug (1) eine Umgebungsüberwachungsvorrichtung (105, 106) beinhaltet, die dazu konfiguriert ist, einen Status einer Umgebung desselben zu überwachen, und
wenn das Betriebsfahrzeug (1) automatisch entlang dem Pfad außerhalb der Betriebsregionen (S) fährt, die Umgebungsüberwachungsvorrichtung (104, 105) dazu konfiguriert ist, ein Überwachungsniveau im Vergleich zu einem Fall, wo das Betriebsfahrzeug (1) automatisch entlang dem Pfad innerhalb der Betriebsregionen (S) fährt, anzuheben.

## Revendications

1. Système de déplacement automatique comprenant :
une unité de génération de trajet (54) qui est configurée pour générer un trajet opérationnel (P1) pour chacune d'une pluralité de régions opérationnelles (S) ; et
une unité de commande de déplacement automatique qui est configurée pour amener un véhicule opérationnel (1) à se déplacer automatiquement le long de chacun des trajets opérationnels (P1) générés par l'unité de génération de trajet (54), dans laquelle
l'unité de génération de trajet (54) est capable de générer un trajet de mouvement (P2) qui relie les régions opérationnelles (S) en amenant le véhicule opérationnel (1) à se déplacer à l'extérieur des régions opérationnelles (S), et **caractérisée en ce que**
l'unité de commande de déplacement automatique est configurée pour arrêter temporairement le véhicule opérationnel (1) avant de commuter un trajet de déplacement où le véhicule opérationnel (1) doit être amené à se déplacer automatiquement d'un trajet à l'intérieur des régions opérationnelles (S) vers un trajet à l'extérieur des régions opérationnelles (S), et pour amener le véhicule opérationnel (1) à se déplacer automatiquement en commutant le trajet de déplacement vers le trajet à l'extérieur des régions opérationnelles (S) lorsque l'état d'arrêt temporel est annulé par la réception d'informations de permission.

2. Système de déplacement automatique selon la revendication 1, dans lequel
l'unité de commande de déplacement automatique est configurée pour arrêter temporairement le véhicule opérationnel (1) avant de commuter le trajet de déplacement où le véhicule opérationnel (1) doit être amené à se déplacer automatiquement du trajet à l'extérieur des régions opérationnelles (S) vers le trajet à l'intérieur des régions opérationnelles (S), et pour amener le véhicule opérationnel (1) à se déplacer automatiquement en commutant le trajet de déplacement vers le trajet à l'intérieur des régions opérationnelles (S) lorsque l'état d'arrêt temporel est annulé.

3. Système de déplacement automatique selon la revendication 1 ou 2, dans lequel
l'unité de génération de trajet (54) est configurée pour générer le trajet de mouvement (P2) sur la base d'une direction de sortie depuis l'intérieur des régions opérationnelles (S) vers l'extérieur des régions opérationnelles, et d'une direction d'entrée depuis l'extérieur des régions opérationnelles (S) vers l'intérieur des régions opérationnelles (S), et la direction de sortie et la direction d'entrée sont modifiables sur la base d'une opération prédéterminée par un outil d'opération.

4. Système de déplacement automatique selon l'une quelconque des revendications 1 à 3, dans lequel
le véhicule opérationnel (1) comprend une unité de détection de l'état d'entrée/sortie qui est configurée pour détecter un état d'une entrée/sortie dans les régions opérationnelles (S),
le véhicule opérationnel (1) comprend une unité de correction de direction de sortie et de direction d'entrée qui est capable de corriger une direction de sortie depuis l'intérieur des régions opérationnelles (S) vers l'extérieur des régions opérationnelles (S), et une direction d'entrée de l'extérieur des régions opérationnelles vers l'intérieur des régions opérationnelles, sur la base des informations de détection de l'unité de détection de l'état d'entrée/sortie, et
lorsque l'unité de correction de direction de sortie et de direction d'entrée corrige la direction de sortie ou la direction d'entrée, l'unité de génération de trajet (54) est capable de corriger le trajet de mouvement (P2) sur la base de la direction de sortie et de la direction d'entrée corrigées.

5. Système de déplacement automatique selon l'une quelconque des revendications 1 à 4, dans lequel
le véhicule opérationnel (1) comprend un dispositif de surveillance de l'environnement (105, 106) qui est configuré pour surveiller l'état d'un environnement associé, et
lorsque le véhicule opérationnel (1) se déplace automatiquement le long du trajet en dehors des régions opérationnelles (S), le dispositif de surveillance de l'environnement (104, 105) est configuré pour augmenter un niveau de surveillance par rapport à un cas où le véhicule opérationnel (1) se déplace automatiquement le long du trajet à l'intérieur des régions opérationnelles (S).
